# EUROPÄISCHE PATENTSCHRIFT

(11) **EP 4 117 987 B1**
(45) Veröffentlichungstag und Bekanntmachung des Hinweises auf die Patenterteilung: **03.04.2024**
(21) Anmeldenummer: 21701432.3
(22) Anmeldetag: 18.01.2021
(51) Int. Cl.: B62J 27/00, B62J 50/21, G08G 1/16, B60W 30/00, B60W 50/00, B60W 50/14

(54) **VERFAHREN UND VORRICHTUNG ZUM BETREIBEN EINES MOTORRADS**
METHOD AND DEVICE FOR OPERATING A MOTORCYCLE
PROCÉDÉ ET DISPOSITIF POUR FAIRE FONCTIONNER UNE MOTO

(30) Priorität: 10.03.2020 DE 102020202986
(43) Veröffentlichungstag der Anmeldung: 18.01.2023
(73) Patentinhaber: Robert Bosch GmbH, 70442 Stuttgart (DE)
(72) Erfinder: SCHULZ, Udo, 71665 Vaihingen/Enz (DE); HACK, Almut, 70327 Stuttgart (DE)
(86) Internationale Anmeldenummer: PCT/EP2021/050929
(87) Internationale Veröffentlichungsnummer: WO 2021/180385

(56) Entgegenhaltungen:
- WO-A1-2019/239402
- CA-A1- 3 079 092
- US-A1- 2013 311 075
- US-B2- 10 222 802

## Beschreibung

### Gebiet der Erfindung

Die Erfindung betrifft ein Verfahren und eine Vorrichtung zum Betreiben eines Motorrads.

### Stand der Technik

In einem PKW können unterschiedliche Fahrerassistenzsysteme zur Entlastung eines Fahrers vorhanden sein. Dazu kann der PKW verschiedene Sensoren zum Erfassen eines Fahrzeugumfelds aufweisen. Die Fahrerassistenzsysteme können auf Daten der Sensoren zugreifen und eine aktuelle Fahrsituation erkennen und analysieren. Aus der Analyse können Fahranweisungen für den Fahrer generiert werden. Im PKW können die Fahranweisungen über unterschiedliche Anzeigesysteme für den Fahrer bereitgestellt werden.

Bei einem Motorrad fehlen im Allgemeinen sowohl die Sensoren als auch die Anzeigesysteme. Ein Fahrer des Motorrads erfasst das Umfeld des Motorrads mit seinen Augen und reagiert auf seine Eindrücke. Das Motorrad wird von seinem Fahrer rein manuell gesteuert.

Ferner ist aus der WO 2019/239402 A1 ein Verfahren zum Betreiben eines Motorrads bekannt, wobei ein Umfeld des Motorrads erfasst wird und für das Motorrad nutzbare Freiflächen im Umfeld erkannt werden, wobei eine Veränderung der Freiflächen und eine Trajektorie des Motorrads prognostiziert und auf Konflikte ausgewertet werden. WO 2019/239402 A1 offenbart die Merkmale des Oberbegriffs des Anspruchs 1.

### Offenbarung der Erfindung

Vor diesem Hintergrund werden mit dem hier vorgestellten Ansatz ein Verfahren zum Betreiben eines Motorrads und eine Vorrichtung zum Betreiben eines Motorrads, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, eine Wahrnehmung eines Fahrers eines Motorrads zu unterstützen. Insbesondere in typischen Motorrad-Fahrsituationen, wie beispielsweise dem Gassenfahren, können Gefahrensituationen erkannt werden und der Fahrer gewarnt werden.

Es wird ein Verfahren zum Betreiben eines Motorrads vorgeschlagen, wobei ein Umfeld des Motorrads erfasst wird und in einer Umfeldinformation abgebildet wird, wobei unter Verwendung der Umfeldinformation für das Motorrad nutzbare Freiflächen im Umfeld erkannt und in einer Freiflächeninformation abgebildet werden, wobei eine Veränderung der Freiflächen unter Verwendung der Freiflächeninformation prognostiziert wird und eine Trajektorie des Motorrads unter Verwendung von Sensordaten des Motorrads prognostiziert wird und die Veränderung der Freiflächen und die Trajektorie auf Konflikte ausgewertet werden, wobei in einem Konfliktfall unter Verwendung der Veränderung eine konfliktfreie Alternativtrajektorie für das Motorrad ermittelt und als Trajektorieninformation einem Fahrer des Motorrads kommuniziert wird.

Ideen zu Ausführungsformen der vorliegenden Erfindung können unter anderem als auf den nachfolgend beschriebenen Gedanken und Erkenntnissen beruhend angesehen werden.

Unter einem Motorrad kann ein motorisiertes Zweirad verstanden werden. Das Motorrad ist ein Einspurfahrzeug und kann wie ein Fahrrad durch Stabilisierungsbewegungen seines Fahrers, minimale Lenkbewegungen und ab einer bestimmten Geschwindigkeit durch Kreiselkräfte seiner Räder im Gleichgewicht gehalten werden. Das Gleichgewicht ist dabei instabil beziehungsweise labil. Ohne die Stabilisierungsbewegungen, Lenkbewegungen und/oder Kreiselkräfte kann das Motorrad zur Seite kippen und umfallen.

Als Umfeld des Motorrads kann ein Bereich insbesondere vor dem Motorrad bezeichnet werden. Das Umfeld kann aber auch Bereiche seitlich des Motorrads und/oder hinter dem Motorrad umfassen. Das Umfeld kann beispielsweise durch zumindest eine Kamera erfasst werden. Die Kamera kann dabei fest am Motorrad verbaut sein oder aber auch beispielsweise als Helmkamera oder Körperkamera am Fahrer angeordnet sein. In Bildinformationen der Kamera können Objekte und Freiflächen durch maschinelles Sehen, wie beispielsweise Verfahren der "semantischen Segmentierung" erkannt werden.

Alternativ oder ergänzend kann das Umfeld auch mit Ultraschallsensoren oder zumindest einem Radarsensor erfasst werden. Auch in Ultraschalldaten und Radardaten können Objekte erkannt werden.

Freiliegende Bereiche einer Fahrbahn zwischen begrenzenden Objekten können als Freiflächen bezeichnet werden. Eine seitlich zwischen zwei Fahrzeugen liegende Freifläche kann als Gasse bezeichnet werden. Wenn eine Gasse breiter ist als das Motorrad, kann das Motorrad kollisionsfrei durch diese Gasse gelenkt werden. Ein notwendiger Abstand zu den Fahrzeugen kann dabei beispielsweise von einem Fahrkönnen des Fahrers und/oder einer aktuellen Geschwindigkeit abhängig sein.

Die Freiflächen können sich durch Bewegungen der Objekte und insbesondere der anderen Fahrzeuge verändern, also größer oder kleiner werden. Die Freiflächen können länger und/oder breiter werden, wenn sich die begrenzenden Objekte voneinander entfernen. Die Freiflächen können kürzer und/oder schmaler werden, wenn sich die begrenzenden Objekte aneinander annähern. Diese Veränderung kann für einen begrenzten Zeithorizont vorausschauend vorhergesagt werden, indem beispielsweise Bewegungen der Objekte extrapoliert werden.

Eine Trajektorie des Motorrads kann aus Sensorwerten des Motorrads bestimmt werden. Beispielsweise können ein Lenkwinkel des Motorrads, eine Geschwindigkeit des Motorrads und ein Neigungswinkel des Motorrads erfasst werden um einen aktuellen Kurvenradius des Motorrads zu bestimmen. Die Trajektorie kann ebenfalls bis zu einem begrenzten Zeithorizont extrapoliert werden. Der Zeithorizont kann geschwindigkeitsabhängig sein.

In einem Konfliktfall liegt ein Konflikt zwischen der Trajektorie und Grenzen der Freiflächen vor. Der Konfliktfall kann erkannt werden, wenn die Trajektorie innerhalb des Zeithorizonts zumindest ein die Freifläche begrenzendes Objekt berühren wird. Ein Konflikt wird ebenfalls festgestellt, wenn eine Freifläche entlang der Trajektorie wahrscheinlich um weniger als den Sicherheitsabstand schmaler als das Motorrad werden wird.

Eine Alternativtrajektorie führt das Motorrad an einem Ort des Konflikts vorbei ohne die Grenze der Freifläche zu verletzen oder den Sicherheitsabstand zu unterschreiten. Um auf die Alternativtrajektorie zu gelangen ist zumindest ein aktiver Eingriff in eine Dynamik des Motorrads erforderlich. Beispielsweise können ein Beschleunigungsvorgang, ein Bremsvorgang und/oder zumindest ein Lenkvorgang erforderlich sein, um das Motorrad auf die Alternativtrajektorie zu bewegen.

Die Alternativtrajektorie kann an den Fahrer des Motorrads beispielsweise über eine Richtungsempfehlung kommuniziert werden. Die Richtungsempfehlung kann dabei entweder nach rechts oder links weisen. Alternativ oder ergänzend kann die Alternativtrajektorie an den Fahrer über eine Bremsempfehlung beziehungsweise Beschleunigungsempfehlung kommuniziert werden. Die Empfehlungen können beispielsweise optisch, haptisch und/oder akustisch bereitgestellt werden.

Wenn das Motorrad entsprechende Aktoren aufweist kann dem Fahrer die Richtungsempfehlung als haptischer Hinweis durch eine Lenkunterstützung in die richtige Richtung kommuniziert werden. Ebenso kann das Bremssystem des Motorrads beispielsweise für einen Bremsruck angesteuert werden, um dem Fahrer die Bremsempfehlung für die Alternativtrajektorie zu kommunizieren. Weiterhin kann eine Motorsteuerung des Motorrads beispielsweise für einen Beschleunigungsruck angesteuert werden, um dem Fahrer die Beschleunigungsempfehlung für die Alternativtrajektorie zu kommunizieren.

Zum Prognostizieren der Veränderung der Freiflächen und alternativ oder ergänzend zum Prognostizieren der Trajektorie kann eine charakteristische Eigenbewegung des Motorrads berücksichtigt werden. Zur Stabilisierung der Fahrlage fährt der Fahrer bei Geradeausfahrt als charakteristische Eigenbewegung insbesondere bei niedriger Geschwindigkeit eine Schlangenlinie. Durch die Schlangenlinie kann eine Verbindungslinie zwischen einem Aufstandspunkt des Hinterrads und einem Aufstandspunkt des Vorderrads jeweils rechts und links von einem Schwerpunkt des Motorrads versetzt werden um das Gleichgewicht zu halten. Diese Schlangenlinie kann umso ausgeprägter sein, je langsamer das Motorrad fährt.

Zum Einleiten einer Kurvenfahrt bewirkt der Fahrer als charakteristische Eigenbewegung im Allgemeinen zuerst einen Gegenimpuls entgegen der gewünschten Kurvenrichtung, um das Motorrad in die Kurve anzukippen beziehungsweise den Schwerpunkt in Richtung Kurveninnenseite zu verlagern. Anschließend lenkt der Fahrer das Motorrad in Schräglage durch die Kurve. Am Ende der Kurve erfolgt eine Aufrichtbewegung durch eine stärkere Lenkbewegung in Kurvenrichtung, um den Schwerpunkt wieder über die Verbindungslinie zu bringen. Diese charakteristische Eigenbewegung weist einen Platzbedarf auf, der größer ist, als eine Projektion des Motorrads auf den Boden beziehungsweise in die Ebene. Diesem vergrößerten Platzbedarf des Motorrads kann so Rechnung getragen werden.

Eine Fahrbarkeit der Alternativtrajektorie kann unter Verwendung eines mathematischen Einspurmodells des Motorrads ermittelt werden. Dabei kann eine dynamische Stabilität des Motorrads unter Verwendung des Einspurmodells abgesichert werden. Wenn eine Alternativtrajektorie als fahrbar klassifiziert wird, kann das Motorrad ohne radikale Richtungsänderung und/oder Geschwindigkeitsänderung sicher auf die Alternativtrajektorie gelenkt werden. Das Einspurmodell kann ein dynamisches Verhalten des Motorrads in einem Algorithmus abbilden. Unter Verwendung des Einspurmodells kann beispielsweise überprüft werden, ob ein Kurvenradius der Alternativtrajektorie mit der gegenwärtigen Geschwindigkeit gefahren werden kann. Ebenso kann ein aufrichtendes Moment beim Bremsen berücksichtigt werden, falls in einer Kurve der Alternativtrajektorie gebremst werden soll. Durch die Betrachtung der Fahrbarkeit kann auch ein weniger geübter Fahrer das Motorrad sicher auf der Alternativtrajektorie führen.

Zum Prognostizieren der Veränderung der Freiflächen kann eine Bewegungsprognose anderer Verkehrsteilnehmer ausgeführt werden. Eine Bewegungsprognose kann mögliche und/oder wahrscheinliche Bewegungen und/oder Trajektorien der Verkehrsteilnehmer mit einer gewissen Wahrscheinlichkeit prognostizieren. Aktuelle Bewegungen und/oder Trajektorien der anderen Verkehrsteilnehmer im Umfeld des Motorrads können in Sensordaten erkannt und ausgewertet werden. Die Bewegungen und/oder Trajektorien können für die Bewegungsprognose innerhalb des Zeithorizonts extrapoliert werden.

Die Bewegungsprognose kann unter Verwendung von Trajektorieninformationen der anderen Verkehrsteilnehmer erstellt werden. Zumindest ein anderer Verkehrsteilnehmer kann über einen beispielsweise digitalen Kommunikationskanal Trajektorieninformationen über seine bisher gefahrene Trajektorie bereitstellen. Beispielsweise können Informationen über eine Geschwindigkeit des Verkehrsteilnehmers, eine Beschleunigung des Verkehrsteilnehmers, eine Fahrtrichtung des Verkehrsteilnehmers oder einen Lenkwinkel des Verkehrsteilnehmers in den Trajektorieninformationen enthalten sein. Die Trajektorieninformationen können auch direkt eine geplante zukünftige Trajektorie des Verkehrsteilnehmers abbilden. Durch Trajektorieninformationen kann die Bewegungsprognose mit einer hohen Genauigkeit ausgeführt werden. Die Trajektorieninformationen sind unabhängig vom Sichtfeld der Sensoren des Motorrads, wodurch sich ein größerer Sichtbereich ergibt.

Beim Erfassen des Umfelds können Lichtsignale der anderen Verkehrsteilnehmer erfasst werden. Die Bewegungsprognose kann unter Verwendung der Lichtsignale erstellt werden. Lichtsignale können beispielsweise durch Blinkleuchten, Bremsleuchten und/oder Rückfahrscheinwerfer der anderen Verkehrsteilnehmer bereitgestellt werden. Eine blinkende Blinkleuchte kann dabei einen bevorstehenden Spurwechsel ankündigen. Eine aufleuchtende Bremsleuchte kann einen Bremsvorgang anzeigen. Lichtsignale können erkannt werden, bevor eine Bewegung erkannt werden kann. Dadurch können die Veränderungen der Freiflächen besser beziehungsweise vorausschauender prognostiziert werden.

Im Konfliktfall können Warnsignale an die anderen Verkehrsteilnehmer gesendet werden. Die Warnsignale können automatisch und ohne Zutun des Fahrers gesendet werden. Warnsignale können optisch und/oder akustisch gesendet werden. Beispielsweise kann ein Scheinwerfer des Motorrads als Lichthupe verwendet werden. Ebenso können Blinkleuchten des Motorrads als Warnblinkleuchten aktiviert werden. Alternativ oder ergänzend kann ein Signalhorn des Motorrads aktiviert werden. Die Warnsignale können eine Abfolge von Impulsen aufweisen, die als künstlich erzeugt erkennbar sind. Beispielsweise können die Impulse in schneller Abfolge gesendet werden. Alternativ oder ergänzend können die Impulse als auffälliges Muster gesendet werden.

Die Alternativtrajektorie kann unter Verwendung von haptischen Signalen an den Fahrer kommuniziert werden. Haptische Signale können über Kontaktpunkte des Fahrers zum Motorrad übertragen werden. Die Kontaktpunkte können beispielsweise die Lenkgriffe, das Sitzpolster, die Fußrasten und/oder Anlageflächen für die Knie sein. Die Kontaktpunkte können beispielsweise in Vibration versetzt werden. Die Vibration kann durch Impulse ergänzt oder ersetzt werden. Die haptischen Signale können als charakteristische Signalmuster bereitgestellt werden.

Die Alternativtrajektorie kann unter Verwendung von akustischen Signalen an den Fahrer kommuniziert werden. Akustische Signale können über Tonerzeuger am Motorrad bereitgestellt werden. Ebenso können akustische Signale über Lautsprecher im Helm bereitgestellt werden. Akustische Signale können Warnungen und/oder Anweisungen sein. Beispielsweise kann der Fahrer durch eine Warnung auf eine Gefahrensituation hingewiesen werden. Ebenso kann der Fahrer durch eine Anweisung zum Handeln entsprechend der Alternativtrajektorie aufgefordert werden. Haptische Signale können akustisch untermalt werden, um ihre Wirkung zu verstärken.

Die Alternativtrajektorie kann optisch an den Fahrer kommuniziert werden. Dabei kann die Alternativtrajektorie in ein Sichtfeld des Fahrers eingeblendet werden. Optische Signale können beispielsweise über Warnlampen und/oder Signallampen bereitgestellt werden. Die Warnlampen und/oder Signallampen können Teil eines Cockpits des Motorrads sein. Beispielsweise können Richtungsanzeiger des Cockpits zum Anzeigen einer Ausweichrichtung verwendet werden. Die Warnlampen und/oder Signallampen können auch zusätzlich im Cockpit angeordnet sein. Ebenso können die Warnlampen und/oder Signallampen am Helm angeordnet sein.

Die optischen Signale können ebenfalls grafisch über ein Display bereitgestellt werden. Das Display kann Teil des Cockpits sein. Ebenso kann das Display am Helm angeordnet sein oder Teil eines separaten Geräts sein. Das Display kann beispielsweise im Normalfall zur Anzeige von Navigationsinformationen verwendet werden.

Die Alternativtrajektorie kann unter Verwendung von Karteninformationen des Umfelds ermittelt werden. Die Alternativtrajektorie kann vorausliegende Gefahrenstellen berücksichtigen. Beispielsweise kann ein Kurvenradius einer vorausliegenden Kurve berücksichtigt werden und beispielsweise ein Bremsvorgang anstatt eines theoretisch möglichen Beschleunigungsvorgangs als Teil der Ausweichtrajektorie verwendet werden

Das Motorrad kann dazu angesteuert werden der Alternativtrajektorie zu folgen, wenn der Fahrer innerhalb eines Reaktionszeitraums keine Reaktion auf die Kommunikation zeigt. Ein Ansteuern des Motorrads kann einen Beschleunigungsvorgang oder Bremsvorgang und/oder einen Lenkvorgang ansteuern. Der Lenkvorgang kann dabei durch einen Lenkaktor angesteuert werden, über den ein Lenkwinkel des Vorderrads eingestellt werden kann. Der Bremsvorgang kann am Bremssystem des Motorrads angesteuert werden. Der Beschleunigungsvorgang kann über die Motorsteuerung des Motorrads angesteuert werden. Während des Reaktionszeitraums kann die Alternativtrajektorie fortlaufend aktualisiert werden, um auf die Veränderungen der Freifläche sicher reagieren zu können. Wenn der Fahrer selbst die Kontrolle übernimmt kann das Ansteuern abgebrochen werden. Die Kommunikation kann jedoch über alle möglichen Kommunikationswege aufrecht gehalten werden, um den Fahrer weiterhin auf die Alternativtrajektorie hinzuweisen.

Das Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die dazu ausgebildet ist, um die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Motorrads mit einer Vorrichtung gemäß einem Ausführungsbeispiel;
Fig. 2 zeigt eine Darstellung eines Motorrads mit einer Vorrichtung gemäß einem Ausführungsbeispiel in einer Gasse zwischen anderen Fahrzeugen;
Fig. 3 zeigt eine Darstellung eines Motorrads mit einer Vorrichtung gemäß einem Ausführungsbeispiel in einer Gasse mit einem in die Gasse einscherenden Fahrzeug; und
Fig. 4 zeigt eine Darstellung eines Motorrads mit einer Vorrichtung gemäß einem Ausführungsbeispiel auf einer in der Vorrichtung ermittelten Ausweichtrajektorie.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

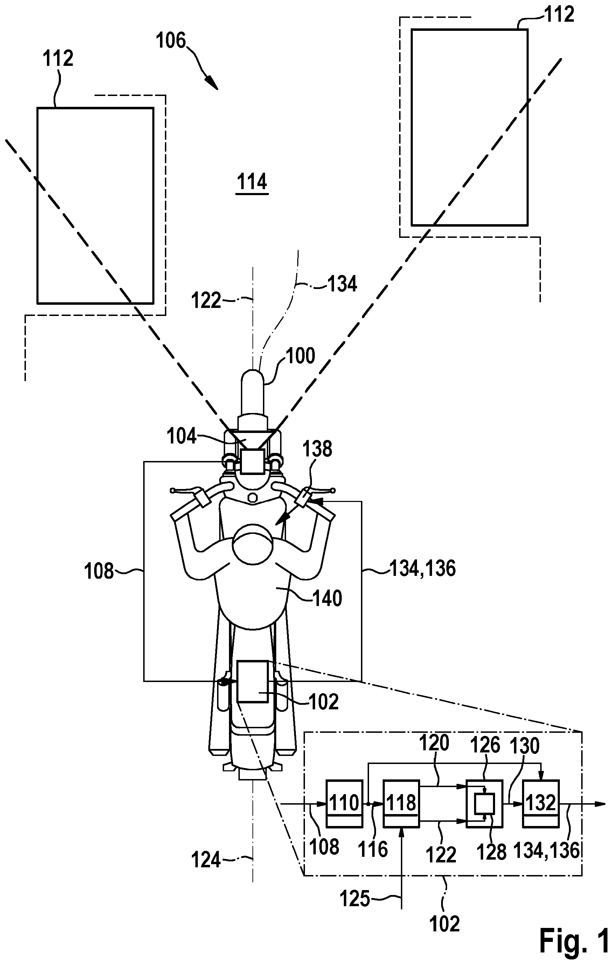

Fig. 1 zeigt eine Darstellung eines Motorrads 100 mit einer Vorrichtung 102 gemäß einem Ausführungsbeispiel. Das Motorrad 100 weist hier eine nach vorne ausgerichtete Kamera 104 auf. Die Kamera 104 erfasst einen Ausschnitt eines Umfelds 106 des Motorrads 100 und bildet ihn in einer Umfeldinformation 108 ab. Die Vorrichtung 102 liest die Umfeldinformation 108 ein und wertet diese in einer Auswerteeinrichtung 110 der Vorrichtung 102 aus. Dabei werden unter Verwendung von Algorithmen des maschinellen Sehens Objekte 112 im Umfeld 106 erkannt.

Unter Verwendung der erkannten Objekte werden nutzbare Freiflächen 114 zwischen den Objekten 112 erkannt und in einer Freiflächeninformation 116 abgebildet. Aus einer Veränderung der Freiflächen 114 in einem zurückliegenden Zeitraum, also aus zumindest zwei mit einem Zeitversatz zueinander erstellten Freiflächeninformationen 116, prognostiziert eine Prognoseeinrichtung 118 der Vorrichtung 102 eine wahrscheinliche zukünftige Veränderung 120 der Freiflächen 114 in einem zukünftigen Zeitraum. Die Zeiträume können dabei beispielsweise wenige Sekunden umfassen.

Die Prognoseeinrichtung 118 prognostiziert weiterhin eine wahrscheinliche zukünftige Trajektorie 122 des Motorrads 100 in dem zukünftigen Zeitraum unter Verwendung einer beispielsweise in dem zurückliegenden Zeitraum erfassten aktuellen Trajektorie 124 des Motorrads 100. Die aktuelle Trajektorie 124 kann beispielsweise über Sensoren am Motorrad 100 erfasst werden.

In einer Auswerteeinrichtung 126 der Vorrichtung 102 werden die Veränderung 120 und die zukünftige Trajektorie 122 auf Konflikte 128 ausgewertet. Die Auswerteeinrichtung 126 zeigt den Konflikt 128 als Konfliktfall 130 an. Im Konfliktfall 130 wird in einer Ermittlungseinrichtung 132 der Vorrichtung 102 unter Verwendung der Freiflächeninformation 116 zumindest eine konfliktfreie Alternativtrajektorie 134 für das Motorrad 100 ermittelt. Die Alternativtrajektorie 134 wird in einer Trajektorieninformation 136 abgebildet und über ein Kommunikationssystem 138 der Vorrichtung 102 beziehungsweise des Motorrads 100 an einen Fahrer 140 des Motorrads 100 kommuniziert.

In einem Ausführungsbeispiel ist die Kamera 104 als Helmkamera des Fahrers 140 ausgeführt. Die Helmkamera erfasst ebenso einen Ausschnitt des Umfelds 106 in der Umfeldinformation. Dabei ist jedoch der Ausschnitt variabel, also abhängig von einer Kopfstellung des Fahrers 140.

In einem Ausführungsbeispiel ist das Kommunikationssystem 138 dazu ausgebildet, als ein Kommunikationsweg haptische Signale für den Fahrer 140 bereitzustellen. Dazu sind an mindestens zwei Kontaktpunkten zwischen dem Fahrer 140 und dem Motorrad 100 Geber für Vibrationen und/oder Impulse angeordnet. Beispielsweise sind Geber des Kommunikationssystems 138 an beiden Lenkergriffen des Motorrads 100 angeordnet. Alternativ oder ergänzend können Geber paarweise an den Fußrasten und/oder seitlich am Tank angeordnet sein. Über Vibrationen und/oder Impulse am rechten oder linken Geber kann eine Richtung der Alternativtrajektorie 134 kommuniziert werden. Warnungen können an beiden Gebern gleichzeitig ausgegeben werden. Auch eine Sitzfläche des Motorrads kann über einen oder mehrere Geber Impulse und/oder Vibrationen auf den Fahrer übertragen. Die Vibrationen und/oder Impulse können beispielsweise so lange ausgegeben werden, bis der Fahrer 140 auf der Alternativtrajektorie 134 fährt.

In einem Ausführungsbeispiel ist das Kommunikationssystem 138 dazu ausgebildet, als ein Kommunikationsweg akustische Signale für den Fahrer 140 bereitzustellen. Dazu kann das Motorrad 100 beispielsweise einen auf den Fahrer 140 ausgerichteten Lautsprecher aufweisen. Ebenso können die akustischen Signale über Kopfhörer im Helm des Fahrers 140 bereitgestellt werden. Dazu kann beispielsweise ein Kopfhörerkabel des Helms am Motorrad 100 angesteckt werden. Vorteilhafterweise können die akustischen Signale drahtlos an den Kopfhörer übertragen werden. Die akustischen Signale können Töne oder Tonfolgen sein. Ebenso können die akustischen Signale gesprochene Anweisungen beziehungsweise Warnungen sein. Die akustischen Signale können in Kombination mit haptischen und/oder optischen Signalen bereitgestellt werden.

In einem Ausführungsbeispiel ist das Kommunikationssystem 138 dazu ausgebildet, als ein Kommunikationsweg optische Signale für den Fahrer 140 bereitzustellen. Beispielsweise ist in einem Cockpit des Motorrads 100 zumindest eine Signalleuchte angeordnet. Die Signalleuchte kann aufleuchten, blinken und/oder die Farbe wechseln. Bei paarweise links und rechts verbauten Signalleuchten kann eine Richtung der Alternativtrajektorie 134 angezeigt werden. Die Signalleuchten können auch im oder am Helm des Fahrers 140 angeordnet sein. Analog zu den Kopfhörern können die Signalleuchten kabelgebunden oder kabellos angesteuert werden.

In einem Ausführungsbeispiel weist das Kommunikationssystem 138 ein Display zum Anzeigen der Trajektorieninformation 136 auf. Die Trajektorieninformation 136 und weitere Informationen können auf dem Display grafisch dargestellt werden. Das Display kann dabei fest in das Cockpit integriert sein und auch als Head-Up Display ausgeführt sein. Ebenso kann als Display ein externes Gerät, wie ein im Blickfeld des Fahrers 140 angeordnetes Navigationsgerät verwendet werden. Das Display kann aber auch in den Helm integriert sein.

In einem Ausführungsbeispiel weist das Motorrad eine weitere Kamera auf, die auf den Fahrer 140 gerichtet ist. Über diese Kamera wird eine Blickrichtung des Fahrers 140 erfasst. So kann ermittelt werden, ob der Fahrer 140 die Trajektorieninformation 136 registriert hat beziehungsweise den Konflikt 128 erkannt hat. Wenn der Fahrer 140 die Trajektorieninformation 136 und/oder den bevorstehenden Konflikt nicht erkannt hat, kann die Trajektorieninformation 136 mit einer höheren Dringlichkeit kommuniziert werden. Beispielsweise kann die Trajektorieninformation 136 zeitgleich auf mehreren der obengenannten Kommunikationswege kommuniziert werden.

In einem Ausführungsbeispiel wird zum prognostizieren der Trajektorie 122 eine charakteristische Eigenbewegung des Motorrads 100 berücksichtigt. Durch die Eigenbewegung kann ein Raumbedarf des Motorrads 100 auf der Trajektorie 122 so prognostiziert werden, dass bei der Konfliktbetrachtung in der Auswerteeinrichtung 126 ausreichend Sicherheitsabstand zu den erkannten Objekten 112 eingehalten werden kann.

In einem Ausführungsbeispiel wird die Alternativtrajektorie 134 unter Verwendung eines mathematischen Einspurmodells des Motorrads 100 auf ihre Fahrbarkeit überprüft. So kann sichergestellt werden, dass das Motorrad 100 die Alternativtrajektorie 134 ohne radikale Geschwindigkeitsänderungen und/oder radikale Richtungsänderungen und ohne Stabilitätsverlust befahren kann. Wenn die Fahrbarkeit unter einem Schwellenwert liegt, wird die Alternativtrajektorie verworfen und nicht an den Fahrer 140 kommuniziert. Dann wird eine andere Alternativtrajektorie 134 ermittelt, überprüft und kommuniziert.

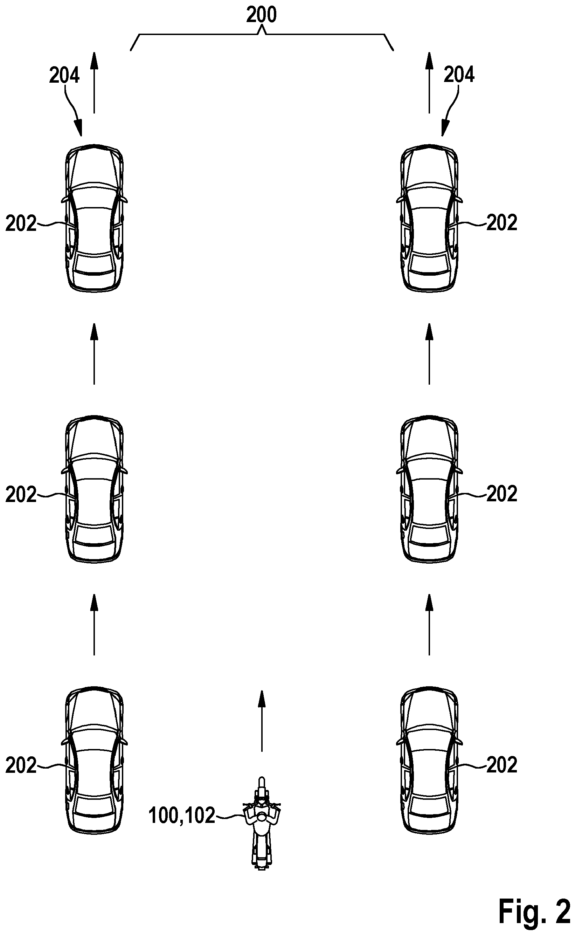

Fig. 2 zeigt eine Darstellung eines Motorrads 100 mit einer Vorrichtung 102 gemäß einem Ausführungsbeispiel in einer Gasse 200 zwischen anderen Fahrzeugen 202. Das Motorrad 100 entspricht dabei im Wesentlichen dem Motorrad in Fig. 1. Das Motorrad 100 fährt auf einer Richtungsfahrbahn mit zumindest zwei Fahrstreifen in der Gasse 200 zwischen zwei Kolonnen 204 Fahrzeuge 202. Die Fahrzeuge 202 werden von der Vorrichtung 102 als Objekte erkannt, während die Gasse 200 als Freifläche zwischen den Objekten erkannt wird. Das Motorrad 100 fährt mit einer geringfügig höheren Geschwindigkeit als die Fahrzeuge 202 durch die Gasse 200.

Die Vorrichtung 102 führt eine Bewegungsprognose für die Fahrzeuge 202 im Erfassungsbereich der Kamera durch. Dabei wird aus Trajektorieninformationen der Fahrzeuge 202, also einer aktuellen Bewegungsrichtung beziehungsweise Änderung der Bewegungsrichtung und einer aktuellen Geschwindigkeit beziehungsweise einer aktuellen Änderung der Geschwindigkeit der Fahrzeuge 202 auf eine zukünftige Bewegungsrichtung und zukünftige Geschwindigkeit der Fahrzeuge 202 geschlossen. So kann eine Entwicklung der Abstände zwischen den Fahrzeugen 202 prognostiziert werden.

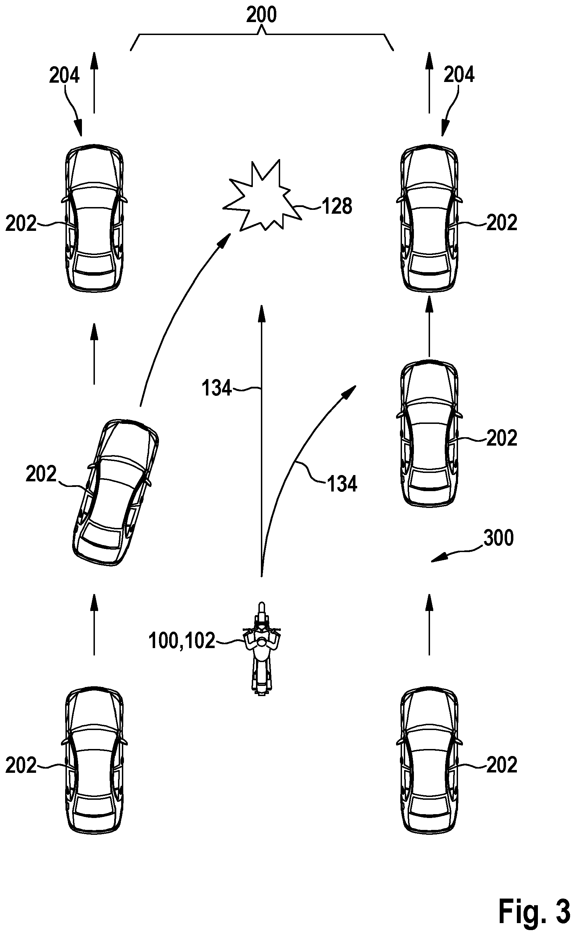

Fig. 3 zeigt eine Darstellung eines Motorrads 100 mit einer Vorrichtung 102 gemäß einem Ausführungsbeispiel in einer Gasse 200 mit einem in die Gasse 200 einscherenden Fahrzeug 202. Die Darstellung entspricht im Wesentlichen der Darstellung in Fig. 2. Hier schert ein Fahrzeug 202 aus der linken Kolonne 204 vor dem Motorrad 100 in die Gasse 200. Die Vorrichtung 102 erkennt den bevorstehenden Konflikt 128 und ermittelt Alternativtrajektorien 134. Dabei besteht die Möglichkeit zu beschleunigen und so noch an dem aus der Kolonne 204 ausscherenden Fahrzeug 202 vorbei zu kommen, abzubremsen und sich hinter dem ausscherenden Fahrzeug 202 einzureihen oder seitlich in Richtung der anderen Kolonne 204 auszuweichen. Die Möglichkeit des Ausweichens ergibt sich dadurch, dass sich in der rechten Kolonne 204 gerade eine Lücke 300 rechts neben dem Motorrad 100 öffnet, da ein Fahrzeug 202 in der rechten Kolonne 204 seinen Abstand zum Vordermann vergrößert.

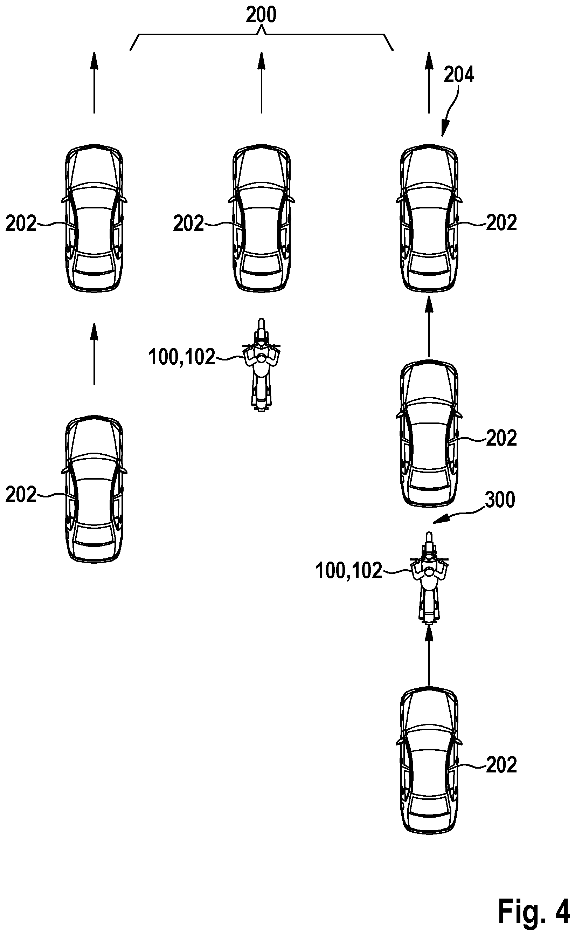

Fig. 4 zeigt eine Darstellung eines Motorrads 100 mit einer Vorrichtung 102 gemäß einem Ausführungsbeispiel auf einer in der Vorrichtung 102 ermittelten Ausweichtrajektorie. Die Darstellung entspricht dabei im Wesentlichen der Darstellung in Fig. 3. Hier ist das Fahrzeug 202 in die Gasse 200 eingeschert und blockiert die Gasse 200.

In einem Ausführungsbeispiel hat die Vorrichtung 102 den Fahrer aufgefordert zu bremsen. Dadurch fährt das Motorrad 100 jetzt hinter dem eingescherten Fahrzeug 202.

In einem Ausführungsbeispiel hat die Vorrichtung 102 den Fahrer aufgefordert, nach rechts in Lücke 300 auszuweichen. Dadurch hat sich der Fahrer in die rechte Kolonne 204 eingereiht. Alternativ kann der Fahrer auch durch die Lücke 300 fahren, um auf die rechte Seite der rechten Kolonne 204 zu gelangen und seine Fahrt dort fortzusetzen.

Mit anderen Worten zeigen die Fign 1 bis 4 einen vorausschauenden Two-Wheeler Assistent zur Kollisionsvermeidung bei Fahrtrichtungswechseln von beteiligten Verkehrsteilnehmern.

Motorräder sind agiler, schmaler, haben variablere und vielfältigere Trajektorien als Pkw und werden oft von Pkw-Fahrern nicht oder zu spät erkannt. Insbesondere das Gassenfahren und das Durchschlängeln in dichtem Verkehr birgt hohe Unfallrisiken, da rückwärtige Motorräder und deren Fahrer oft nicht oder zu spät von den Pkw-Fahrern wahrgenommen werden. Ähnlich riskant sind mehrspurige Straßen im Stadtverkehr. Hier fahren die Fahrzeuge oft mit ähnlicher Geschwindigkeit nebeneinander her. Oftmals hat es ein Pkw-Fahrer eilig und fährt auf der vermeintlich schnelleren linken Spur. Fließt der Verkehr auf der rechten Spur aber doch schneller, gerät ein Motorrad-Fahrer leicht in den toten Winkel. Der gehetzte Pkw-Fahrer möchte die nächste Ausfahrt nehmen und übersieht das Motorrad. (Beispiel: B14 im Zentrum von Stuttgart.)

Durch den hier vorgestellten Ansatz können Unfälle von Motorrädern mit anderen Fahrzeugen im Straßenverkehr vermieden werden.

Dazu wird der Motorradfahrer vorausschauend und rechtzeitig vor in die zukünftige prognostizierte Trajektorie des Motorrades einscherenden bzw. querenden Fahrzeugen gewarnt. Optional je nach Ausführungsbeispiel mit zusätzlichen unfallvermeidenden Systemeingriffen am Motorrad und/oder den beteiligten Fahrzeugen.

Der Vorteil des hier vorgestellten Ansatzes liegt in einer weiteren Verringerung von schweren Motorradunfällen und damit einem geringeren Verletzungsrisiko der Motorradfahrer.

Mittels nach vorn in Fahrtrichtung ausgerichteter Kamera und maschinellem Sehen (Verfahren und Algorithmen zur Merkmalsextraktion, Objekterkennung und Klassifikation) können Fahrzeuge, Fahrzeuglichtsignale, Verkehrszeichen / Ampeln und Fahrbahnmarkierungen, Infrastruktur (Gebäude, Brücken, Geländer, Fahrbahnen, Gehsteige, usw.), Personen usw. maschinell in Echtzeit erkannt werden.

Mit diesen Informationen ist eine Freiflächenerkennung befahrbarer Bereiche z.B. in Fahrtrichtung möglich. In diese Bereiche kann ein Fahrzeug hineinfahren bzw. in diese Bereiche ausweichen, ohne mit anderen Objekten zu kollidieren. Hier ausgewertete Freiflächen beziehen Bereiche zwischen Fahrzeugen längs und quer der Fahrtrichtung bzw. prognostizierten Trajektorie des Motorrads mit ein.

In/auf diese Freiflächen können aus der jeweiligen Kinematik und Dynamik des Motorrads und der anderen Fahrzeuge diejenigen Trajektorien prognostiziert werden, die eine Wahrscheinlichkeit bzw. ein Risiko des Zusammentreffens von Fahrzeugen bzw. Überschneidens der Trajektorien aufzeigen.

Da insbesondere bei engen Fahrgassen (Gassenfahren) und/oder Fahrzeugabständen (Durchschlängeln) auch das nicht ausreichend für Motorrad und Fahrer sein kann, werden Indikatoren für wahrscheinlich bevorstehende Änderungen der Freiflächen und Änderungen der prognostizierten Trajektorien der anderen Fahrzeuge erkannt. Hierbei sind insbesondere wahrscheinliche Verringerungen der Fahrgassenbreite und/oder Verringerung der Fahrzeugabstände von Interesse.

Beispielsweise können spontane Änderungen in der Pose der Fahrzeuge auf eine Änderung der prognostizierten Trajektorien der Fahrzeuge hindeuten. Die Änderungen können mittels maschinellem Sehen erkannt werden.

Werden bspw. aktive Blinker der Fahrzeuge entlang der prognostizierten Fahrgasse des Motorrades mittels maschinellem Sehen erfasst, so kann eine Änderung der prognostizierten Trajektorien der blinkenden Fahrzeuge in Blinkrichtung bevorstehen.

Aus den prognostizierten Freiflächen und der Trajektorie des Motorrads kann abgeleitet werden, ob ein komfortables und sicheres Befahren und/oder Beschleunigen und/oder Bremsen noch möglich ist. Wenn nicht können mittels automatisch aktivierter Licht und/oder Hupe des Motorrads die Fahrer der anderen Fahrzeuge entlang der prognostizierten Trajektorie des Motorrads gewarnt werden. Dem Fahrer des Motorrads kann die Freifläche nach vorn mindestens aber entlang der prognostizierten Trajektorie des Motorrads und eine komfortable und sichere Route angezeigt werden. Je nach Dynamik der Freiflächenänderung kann eine Empfehlung auf Beschleunigen (die Freifläche reicht demnächst nicht aus ist aber bei höherer Geschwindigkeit noch passierbar) oder Bremsen (Freifläche ist nicht ausreichend) erfolgen.

Zudem können auch haptische und/oder visuelle und/oder akustische Signale den Motorradfahrer unterstützen. Ist bspw. ein Ausweichen des Motorrads nur noch nach links kollisionsfrei möglich so kann durch Vibrationen ein Hinweis erfolgen und/oder durch grüne LED links und/oder rote LED rechts der Motorradfahrer in einer schnellen Entscheidung unterstützt werden.

In einem Ausführungsbeispiel ist auf dem Motorrad eine Freiflächenerkennung um das Motorrad herum implementiert (zusätzlich seitlich und nach hinten). Dadurch kann dem Motorradfahrer angezeigt werden, dass dieser spontaner lenken / ausweichen kann ohne erst in den Spiegel zu sehen / Schulterblick/ Umdrehen sich orientieren muss usw. um nicht mit dem Parallel und rückwärtigen Verkehr zu kollidieren (schnellere Reaktionszeiten).

Aus einer prädiktiven Trajektorienschätzung und mittels maschinellem Sehen erkannter Verkehrszeichen und Fahrbahnmarkierungen usw. können auch beginnende Fahrspurwechsel und Richtungsänderungen von Fahrzeugen abgeschätzt werden auch ohne dass die Fahrzeuge blinken (z.B. Fahrer die nicht Blinken und nicht Schauen) und akustische und/oder Licht- Signale angewendet werden, um die jeweiligen Fahrer zu warnen.

Im Prinzip können alle seitlichen und rückwärts gerichteten abstandsmessenden und objekterkennenden Sensoren genutzt werden um die Freiflächen und Objekte um das Fahrzeug herum zu erkennen. So kann der nach hinten gerichtete Ultraschallsensor bzw. Radar den Abstand zum nächst hinteren Fahrzeug bestimmen und die seitlichen nach hinten gerichteten Kameras z.B. des Spiegelersatzsystems und/oder des Surround View Systems (360°) einen seitlich von hinten kommendes Motorrad erkennen.

Ein zu enger Abstand zwischen den Fahrzeugen kann seitlich der Fahrzeuge außen angezeigt werden, so dass der Motorradfahrer erkennt, dass ein Hindurchschlängeln durch die Kolonne nicht möglich ist.

Ein seitlich von hinten herannahender Motorradfahrer kann dem Fahrer des Fahrzeugs im Spiegel und/oder den Anzeigen im Fahrzeug angezeigt bzw. signalisiert werden, sodass dieser gewarnt bzw. aufmerksam ist, wenn er in die Fahrgasse bzw. prognostizierte Trajektorie des Motorrades fahren will.

Verfügt das Fahrzeug über eine Driver Monitoring Kamera, so kann noch erkannt werden ob der Fahrer die Warnungen gesehen und wahrgenommen hat und/oder im Spiegel oder rückwärtige und/oder seitliche Videos gesehen und wahrgenommen hat. Vorteilhaft sind Driver Monitoring Kameras die eine 360° Innensicht auf den Fahrer abdecken, wodurch ein Fahrerblick bzw. Kopfrichtung bzw. Blickrichtung dann auch seitlich und nach hinten gut zu detektieren wäre (Schulterblick). Hat der Fahrer den Motorradfahrer nicht wahrgenommen, so kann dies seitlich der Fahrzeuge angezeigt werden, so dass der seitlich von hinten kommende Motorradfahrer gewarnt ist.

Existiert eine V2V Kommunikation zwischen Motorrad und Fahrzeug(en), so können Positionen, Posen, prognostizierte Trajektorien, geplante Routen, Abstände, Annäherungsgeschwindigkeiten, Treffzeiten usw. untereinander ausgetauscht werden. Die äußeren sichtbaren Signalisierungen können zumindest für die vernetzten Fahrzeuge und Motorräder entfallen.

Weiterführend ist auch eine Kommunikation über eine Cloud denkbar, in der alle Informationen in einer Karte fusioniert werden können. Diese fusionierte Karte ist dann allen Nutzern zugänglich. Aus den in der Cloud auf Basis der fusionierten Informationen prognostizierten Trajektorien und Freiflächen können dann die Warnungen an die nutzenden Motorradfahrer und/oder Fahrzeugfahrer gesendet werden. Die Anzeige kann dabei je nach verwendeter Anzeigetechnologie durch Warnlampen bis zur Darstellung der Freifläche auf einem Display und/oder Smart Glasses" oder "Smart Visier" (transparente holographische Anzeige im Visier des Helms) mit farblich markierten Gefahrenbereichen und/oder Trajektorien und/oder "Augmented Reality" (überlagerten Symbolen und/oder Hervorhebungen und/oder Markierungen usw.) erfolgen.

Verfügt auch das Motorrad bzw. der Helm bzw. die Brille des Motorradfahrers über eine Driver Monitoring Kamera, so kann noch erkannt werden ob der Motorradfahrer die Warnungen gesehen und wahrgenommen hat und/oder im Spiegel oder rückwärtige und/oder seitliche Videos gesehen und wahrgenommen hat. Vorteilhaft sind Driver Monitoring Kameras die im Helm bzw. Brille wodurch ein Fahrerblick bzw. Kopfrichtung bzw. Blickrichtung dann auch seitlich und nach hinten gut zu detektieren wäre (Schulterblick). Hat der Motorradfahrer den Fahrzeugfahrer nicht wahrgenommen, so kann dies außen am Motorrad angezeigt werden, so dass die anderen Verkehrsteilnehmer z.B. ein die Fahrtrichtung bzw. Fahrspur ändernder Fahrzeugfahrer gewarnt sind.

Wenn durch das Motorrad z.B. eine leichte Drift des Fahrzeugs nach links erkannt wird und die prognostizierte Trajektorie des Fahrzeugs die Trajektorie des Motorrades zukünftig kollidiert aber die Routenplanung und/oder Richtungsanzeige / Blinker rechts aktiv ist und der elektronische Horizont zu dieser prognostizierten Trajektorie des Fahrzeugs eine Fahrtrichtungsänderung aber nach rechts vorhersagt, dann kann die Warnung unterbleiben solang bis eine deutlichere Änderung der Trajektorie nach links erfolgt (Fahren entgegen der Planung und/oder Blinkens) und/oder die Fahrgasse / Freifläche keinen ausreichend Platz für das Motorrad aufweist und/oder ein notwendiger Bremsweg droht unterschritten zu werden.

Die aktuellen und prädizierten Informationen von drohenden Kollisionen, Überschneidungen von Trajektorien, nicht ausreichenden Freiflächen (Fahrgassen, Fahrzeuglücken) usw. können auch dazu genutzt werden, um Bremsvorgänge und/oder Lenkvorgänge einzuleiten bzw. zu verstärken.

Ist bspw. ein Ausweichen des Motorrads in Freiflächen nur noch nach links kollisionsfrei möglich so kann durch größere Lenkwiderstände nach rechts der Motorradfahrer in einer schnellen Entscheidung (spontanes und schnelles Lenken bzw. Ausweichen) unterstützt werden.

Ist bspw. ein eingeleiteter Bremsvorgang prognostiziert nicht ausreichend um eine Kollision zu verhindern, so kann autonom die Bremskraft verstärkt werden.

Die Fahrtrichtungsanzeigen / Blinker können automatisch gesetzt werden.

Die Hupe kann als akustisches Warnsignal automatisch ausgelöst werden, ggf. durch einen bestimmten Rhythmus, der nicht manuell erzeugt werden kann, z. B. schnell aufeinanderfolgende kurze Töne. Somit kann das automatische Hupen vom manuellen unterschieden werden.

Der hier vorgestellte Ansatz hilft insbesondere beim zuvor durch den Fahrer des Fahrzeugs nicht orientierten und nicht angezeigten Hinüberziehen in die Trajektorie / Freifläche des Motorrades potentielle Unfälle zu vermeiden (Unfälle durch "Rüberziehen", "Davorsetzen", "Schneiden", "Lückenschließen" usw.)

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Motorrads (100), wobei ein Umfeld (106) des Motorrads (100) erfasst wird und für das Motorrad (100) nutzbare Freiflächen (114) im Umfeld (106) erkannt werden, wobei eine Veränderung der Freiflächen (114) und eine Trajektorie (122) des Motorrads (100) prognostiziert und auf Konflikte (128) ausgewertet werden, **dadurch gekennzeichnet, dass** in einem Konfliktfall (130) eine konfliktfreie Alternativtrajektorie (134) für das Motorrad (100) ermittelt und einem Fahrer (140) des Motorrads (100) kommuniziert wird.

2. Verfahren gemäß Anspruch 1, bei dem zum Prognostizieren der Veränderung der Freiflächen (114) und/oder zum Prognostizieren der Trajektorie (122) eine charakteristische Eigenbewegung des Motorrads (100) berücksichtigt wird.

3. Verfahren gemäß einem der vorhergehenden Ansprüche, bei dem eine Fahrbarkeit der Alternativtrajektorie (134) unter Verwendung eines mathematischen Einspurmodells des Motorrads ermittelt wird.

4. Verfahren gemäß einem der vorhergehenden Ansprüche, bei dem zum Prognostizieren der Veränderung der Freiflächen (114) eine Bewegungsprognose anderer Verkehrsteilnehmer ausgeführt wird.

5. Verfahren gemäß Anspruch 4, bei dem die Bewegungsprognose unter Verwendung von Trajektorieninformationen der anderen Verkehrsteilnehmer erstellt wird.

6. Verfahren gemäß einem der Ansprüche 4 bis 5, bei dem beim Erfassen des Umfelds (106) Lichtsignale der anderen Verkehrsteilnehmer erfasst werden und die Bewegungsprognose unter Verwendung der Lichtsignale erstellt wird.

7. Verfahren gemäß einem der vorhergehenden Ansprüche, bei dem im Konfliktfall Warnsignale an die anderen Verkehrsteilnehmer gesendet werden.

8. Verfahren gemäß einem der vorhergehenden Ansprüche, bei dem die Alternativtrajektorie (134) unter Verwendung von haptischen Signalen an den Fahrer (140) kommuniziert wird.

9. Verfahren gemäß einem der vorhergehenden Ansprüche, bei dem die Alternativtrajektorie (134) optisch an den Fahrer (140) kommuniziert wird.

10. Verfahren gemäß einem der vorhergehenden Ansprüche, bei dem die Alternativtrajektorie (134) unter Verwendung von Karteninformationen des Umfelds (106) ermittelt wird.

11. Verfahren gemäß einem der vorhergehenden Ansprüche, bei dem das Motorrad (100) dazu angesteuert wird der Alternativtrajektorie (134) zu folgen, wenn der Fahrer (140) innerhalb eines Reaktionszeitraums keine Reaktion auf die Kommunikation zeigt.

12. Vorrichtung (102), wobei die Vorrichtung (102) dazu ausgebildet ist, das Verfahren gemäß einem der vorhergehenden Ansprüche in entsprechenden Einrichtungen auszuführen, umzusetzen und/oder anzusteuern.

13. Computerprogrammprodukt, das dazu eingerichtet ist, einen Prozessor bei Ausführung des Computerprogrammprodukts dazu anzuleiten, das Verfahren gemäß einem der Ansprüche 1 bis 11 auszuführen, umzusetzen und/oder anzusteuern.

14. Maschinenlesbares Speichermedium, auf dem das Computerprogrammprodukt gemäß Anspruch 13 gespeichert ist.

## Claims

1. Method for operating a motorcycle (100), wherein an environment (106) of the motorcycle (100) is detected and free areas (114) in the environment (106) that are usable by the motorcycle (100) are identified, wherein a change in the free areas (114) and a trajectory (122) of the motorcycle (100) are predicted and evaluated for conflicts (128), **characterized in that**, in the event of a conflict (130), a conflict-free alternative trajectory (134) for the motorcycle (100) is ascertained and communicated to a rider (140) of the motorcycle (100).

2. Method according to Claim 1, in which a characteristic independent movement of the motorcycle (100) is taken into consideration for predicting the change in the free areas (114) and/or for predicting the trajectory (122).

3. Method according to either of the preceding claims, in which an ability to drive along the alternative trajectory (134) is ascertained using a mathematical single-track model.

4. Method according to any of the preceding claims, in which a prediction of the movement of other road users is executed for predicting the change in the free areas (114) .

5. Method according to Claim 4, in which the movement prediction is made using trajectory information relating to the other road users.

6. Method according to either of Claims 4 and 5, in which, when the environment (106) is detected, light signals of the other road users are detected and the movement prediction is made using the light signals.

7. Method according to any of the preceding claims, in which warning signals are sent to the other road users in the event of a conflict.

8. Method according to any of the preceding claims, in which the alternative trajectory (134) is communicated to the rider (140) using haptic signals.

9. Method according to any of the preceding claims, in which the alternative trajectory (134) is optically communicated to the rider (140).

10. Method according to any of the preceding claims, in which the alternative trajectory (134) is ascertained using map information relating to the environment (106).

11. Method according to any of the preceding claims, in which the motorcycle (100) is controlled to follow the alternative trajectory (134) if the rider (140) does not react to the communication within a reaction time period.

12. Apparatus (102), wherein the apparatus (102) is designed to execute, implement and/or activate the method according to one of the preceding claims in corresponding devices.

13. Computer program product which is configured to instruct a processor to execute, implement and/or activate the method according to one of Claims 1 to 11 when executing the computer program product.

14. Machine-readable storage medium on which the computer program product according to Claim 13 is stored.

## Revendications

1. Procédé pour faire fonctionner une motocyclette (100), un environnement (106) de la motocyclette (100) étant capturé et des surfaces libres (114) utilisables pour la motocyclette (100) étant reconnues dans l'environnement (106), une modification des surfaces libres (114) et une trajectoire (122) de la motocyclette (100) étant pronostiquées et évaluées en vue de la présence d'éventuels conflits (128), **caractérisé en ce que**, dans le cas d'un conflit (130), une trajectoire alternative (134) exempte de conflit est déterminée pour la motocyclette (100) et communiquée à un conducteur (140) de la motocyclette (100).

2. Procédé selon la revendication 1, avec lequel un mouvement propre caractéristique de la motocyclette (100) est pris en compte pour pronostiquer la modification des surfaces libres (114) et/ou pour pronostiquer la trajectoire (122).

3. Procédé selon l'une des revendications précédentes, avec lequel une aptitude à la conduite de la trajectoire alternative (134) est déterminée en utilisant un modèle mathématique à une voie de la motocyclette.

4. Procédé selon l'une des revendications précédentes, avec lequel un pronostic de mouvement des autres usagers de la route est effectué pour pronostiquer la modification des surfaces libres (114).

5. Procédé selon la revendication 4, avec lequel le pronostic de mouvement est établi en utilisant des informations de trajectoire des autres usagers de la route.

6. Procédé selon l'une des revendications 4 à 5, avec lequel, lors de la capture de l'environnement (106), des signaux lumineux des autres usagers de la route sont capturés et le pronostic de mouvement est établi en utilisant les signaux lumineux.

7. Procédé selon l'une des revendications précédentes, avec lequel, dans le cas d'un conflit, des signaux d'avertissement sont envoyés aux autres usagers de la route.

8. Procédé selon l'une des revendications précédentes, avec lequel la trajectoire alternative (134) est communiquée au conducteur (140) en utilisant des signaux haptiques.

9. Procédé selon l'une des revendications précédentes, avec lequel la trajectoire alternative (134) est communiquée visuellement au conducteur (140).

10. Procédé selon l'une des revendications précédentes, avec lequel la trajectoire alternative (134) est déterminée en utilisant des informations cartographiques de l'environnement (106).

11. Procédé selon l'une des revendications précédentes, avec lequel la motocyclette (100) est commandée pour suivre la trajectoire alternative (134) lorsque le conducteur (140) ne montre aucune réaction à la communication au sein d'une période de réaction.

12. Dispositif (102), le dispositif (102) étant configuré pour exécuter, mettre en œuvre et/ou commander le procédé selon l'une des revendications précédentes dans des appareils correspondants.

13. Produit de programme informatique, qui est conçu pour amener un processeur, lors de l'exécution du produit de programme informatique, à exécuter, mettre en œuvre et/ou commander le procédé selon l'une des revendications 1 à 11.

14. Support de stockage lisible par machine sur lequel est enregistré le produit de programme informatique selon la revendication 13.
